# EUROPEAN PATENT APPLICATION

(11) **EP 4 830 911 A1**
(43) Date of publication of application: **28.10.2026**
(21) Application number: 24907200.0
(22) Date of filing: 06.12.2024
(51) Int. Cl.: B32B 7/02, B32B 27/00

(54) **WATER-ABSORBING SHEET**

(30) Priority: 19.12.2023 JP 2023214244
(71) Applicant: Toyo Seikan Group Holdings, Ltd., Shinagawa-ku Tokyo 141-8627 (JP)
(72) Inventor: KAWANISHI, Misato, Yokohama-shi, Kanagawa 240-0062 (JP); NANGOU, Shunya, Yokohama-shi, Kanagawa 240-0062 (JP); TAKAYAMA, Keisuke, Yokohama-shi, Kanagawa 240-0062 (JP); OZAWA, Kazumi, Yokohama-shi, Kanagawa 240-0062 (JP)
(74) Representative: J A Kemp LLP
(86) International application number: PCT/JP2024/043233
(87) International publication number: WO 2025/134814

(57) **Abstract**

It is characterized by including a hygroscopic resin layer formed of a resin composition in which a chemical desiccant is dispersed in a thermoplastic resin, and having an indicator function for indicating a decrease in moisture absorption capacity by exhibiting transparency due to moisture absorption.

## Description

### Technical Field

The present invention relates to a water-absorbing sheet, and more particularly, to a water-absorbing sheet including a chemical desiccant.

### Background Art

In the related art, water-absorbing sheets including a hygroscopic resin layer in which a desiccant is dispersed (also referred to as hygroscopic sheets or desiccant sheets) have been widely used for moisture absorption and moisture prevention.

As such water-absorbing sheets, sheets having various layer configurations have been proposed. Patent Literature 1 proposes a hygroscopic sheet including a desiccant layer, a moisture permeable sheet provided on one surface of the desiccant layer, and a pressure-sensitive adhesive layer provided on the other surface of the desiccant layer, and describes that, for example, a cellophane sheet, an acetate sheet, and a nylon sheet are used as the moisture permeable sheet.

Further, Patent Literatures 2 and 3 describe a desiccant sheet including a hygroscopic resin layer in which a desiccant is dispersed.

As the desiccants used in the above-described water-absorbing sheets, physical desiccants exhibiting water absorbency by physical adsorption such as zeolite or silica gel, and chemical desiccants exhibiting water absorbency by a chemical reaction with water have been known. In such desiccants, when the physical desiccants have physically adsorbed water and reached a saturated state, the physical desiccants can easily release the adsorbed water by, for example, heating, and can be repeatedly used. However, the reaction of the chemical adsorbents with water is generally an irreversible reaction, and thus the chemical adsorbents do not release the captured water, unlike the physical adsorbents. Thus, in the water-absorbing sheet using a chemical adsorbent, an index indicating the water absorbency is particularly required.

For example, Patent Literature 4 proposes a resin composition indicator containing a resin composition in which calcium oxide is blended in a polyolefin-based resin.

This indicator indicates the consumption degree of water absorption by the fact that calcium oxide as a chemical desiccant becomes opaque by reacting calcium oxide with water. In other words, the indicator is transparent when water is not absorbed, but when water is absorbed, the calcium oxide particles are converted into calcium hydroxide and expand, cracks are generated in the particles, and thus, the indicator is turned into opaque.

Such a resin composition indicator has advantages, for example, in that the resin composition indicator is used easily as a granular material and a portion thereof can be removed easily in the production stage, the portion being opaque due to water absorption. However, there is a problem in that when the resin composition indicator is attached to another base material as a sheet (or a film) during use, the indicator may not exhibit such an indicator function readily.

In other words, since the degree of occurrence of cracks due to the swelling greatly depends on the particle size distribution, such an indicator does not always become opaque at the same level even at the same degree of water absorption, and large variation may be observed. Therefore, the resin composition indicator has an insufficient function as the indicator to indicate the life of the water absorbency, when the indicator is attached to the another base material.

### Citation List

### Patent Literature

Patent Literature 1: JP 2006-326838 A
Patent Literature 2: JP 2019-177645 A
Patent Literature 3: JP 2019-179705 A
Patent Literature 4: JP 4998155 B

### Summary of Invention

### Technical Problem

Accordingly, an object of the present invention is to provide a water-absorbing sheet having an indicator function for indicating the life of the water absorbency.

Another object of the present invention is to provide a water-absorbing sheet that can effectively exhibit a drying function when attached to another base material.

### Solution to Problem

As a result of studies on water absorbency by chemical desiccants, the present inventors have found that, completely contrary to a known film containing a chemical desiccant (e.g., calcium oxide), a resin film containing a chemical desiccant changes from opaque to transparent due to water absorption, when conditions such as the type, the particle size, and the concentration of the desiccant are selected, and have completed the present invention.

That is, according to the present invention, there is provided a water-absorbing sheet including a hygroscopic resin layer formed of a resin composition in which a chemical desiccant is dispersed in a resin, the water-absorbing sheet having an indicator function for indicating a decrease in moisture absorption capacity by exhibiting transparency due to moisture absorption.

In the water-absorbing sheet of the present invention, the following aspects can be preferably adopted.
(1) The fact that the chemical desiccant has a median size (D50) in the range from 0.5 to 30 µm and is contained in an amount from 5 to 24 mass% in the resin composition.
(2) The fact that the chemical desiccant has a refractive index difference of 0.2 or more from the resin in a state where water is not absorbed, and a refractive index difference of less than 0.1 from the resin in a state where water is absorbed.
(3) The fact that the chemical desiccant is calcium oxide.
(4) The fact that the resin is a thermoplastic resin.
(5) The fact that the thermoplastic resin is an olefin-based resin.
(6) The fact that the water-absorbing sheet has a single-layer structure containing only the hygroscopic resin layer.
(7) The fact that the hygroscopic resin layer and a surface protective layer provided on one surface of the hygroscopic resin layer are included.
(8) The fact that the water-absorbing sheet is used with one surface of the hygroscopic resin layer attached to another base material.
(9) The fact that the another base material is a barrier film.
(10) The fact that the barrier film includes an inorganic barrier layer.
(11) The fact that the another base material includes a metal foil.
(12) The fact that the water-absorbing sheet is used for an electronic device.
(13) The fact that the electronic device is a solar cell.
(14) The fact that the electronic device is an organic electro-luminescence (EL).

### Advantageous Effects of Invention

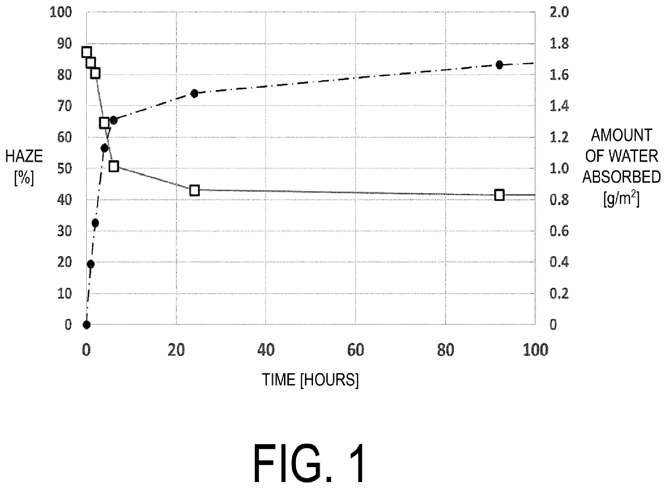

The water-absorbing sheet of the present invention captures (absorbs) moisture by the chemical desiccant, and the chemical desiccant has a basic performance of irreversibly reacting with water to trap moisture. Therefore, it can be said that the chemical desiccant is excellent in that the chemical desiccant exhibits low re-release of the moisture after water absorption and can maintain itself in a stable dry state. Here, a significant feature of the present invention is that the transparency is improved by absorbing moisture. For example, as shown in FIG. 1, the absorbent sheet produced in Example 1 (see Example 1 for detailed conditions) has a haze of about 90% in a state where moisture is not absorbed, but the transparency is improved as moisture is absorbed, and when the absorbed moisture amount reaches saturation, the haze is reduced to 45% or less, and it is found that the transparency is significantly improved. That is, the water-absorbing sheet of the present invention exhibits transparency due to moisture absorption, and thus, serves as an indicator for indicating a decrease in moisture absorption capacity.

Since the indicator function in the water-absorbing sheet of the present invention does not show any variation and is extremely stable, the life of the water-absorbing capacity (drying capacity) of the absorbing sheet can be accurately determined.

### Brief Description of Drawings

FIG. 1 is a graph showing the relationship between the amount of water absorbed and haze of a water-absorbing sheet according to the present invention (Example 1).
FIG. 2 is a view illustrating examples of the layer structure of the water-absorbing sheet according to the present invention.
FIG. 3 is a view illustrating an example of a usage form of the water-absorbing sheet according to the present invention.
FIG. 4 is a schematic view illustrating an example of lamination in Reference Experiment 1.

### Description of Embodiments

### Principle of the Invention

A water-absorbing sheet of the present invention has a hygroscopic resin layer in which a chemical desiccant is dispersed in a resin, and utilizes the principle that the refractive index difference between a reaction product of the chemical desiccant with water and a base resin in which the chemical desiccant is dispersed becomes small, and as a result, the state changes from opaque to transparent.

Thus, for example, the type, the particle size, and the blended amount of the chemical desiccant to be used are set depending on the type of resin such that the above-described change can be clearly visually recognized.

### Chemical Desiccant

The chemical desiccant chemically reacts with water, and typical examples thereof include materials which produce a hydroxide by reaction with water, such as oxides of various metals (e.g., calcium oxide, magnesium oxide, and barium oxide), and materials which form a hydrate by reaction with water, such as metal salts (e.g., calcium chloride and copper sulfate). In particular, a material having a small refractive index difference between a product produced by reaction of the material with water and the resin, appropriate water reactivity, and the ability to stably maintain a granular shape of the material is preferably used. For example, diphosphorus pentoxide (P₂O₅) is not suitable as the desiccant because of its excessively high reactivity with water. In addition, sodium hydroxide (NaOH), potassium hydroxide (KOH), and the like are not suitable for the use because of their unstable particle sizes. Furthermore, although aluminum oxide is an oxide of a metal, it captures water by physical adsorption, and thus, is not a chemical desiccant.

In particular, in the present invention, when polyethylene (refractive index: 1.54) is used as a thermoplastic resin which is the resin (referred to as a binder resin or a base resin) in which the chemical desiccant is dispersed, a metal oxide is preferred because the difference between the refractive index of the metal oxide after the reaction with water and the refractive index of the binder resin is small. Examples thereof include calcium oxide, magnesium oxide, and barium oxide. Particularly, calcium oxide is most preferred because it is relatively inexpensive.

Incidentally, the reaction formula between the metal oxide and water is represented by, for example, the following formula:

MO + H₂O → M(OH)₂

wherein M is a metal atom.

Here, the refractive index of calcium oxide (CaO) is 1.84, and the refractive index of calcium hydroxide (Ca(OH)₂) is 1.57. In addition, the refractive index of magnesium oxide (MgO) is 1.74, and the refractive index of magnesium hydroxide (Mg(OH)₂) is 1.56. Further, the refractive index of barium oxide is 1.98, and the refractive index of barium hydroxide is 1.50.

When these metal oxides are used as the chemical desiccant and the above-mentioned polyethylene, for example, is used as the resin, the refractive index difference between each of the metal oxides before the reaction with water and the resin is 0.2 or more, the refractive index difference between each of the metal hydroxides after the reaction with water and the resin is less than 0.1, and thus, the indicator function before and after the reaction can be effectively exhibited. Note that, in the case of calcium chloride, for example, the refractive index of a hydrate produced by the reaction with water is from 1.3 to 1.4, and the refractive index difference from the resin is relatively large, and thus, the indicator function based on the development of transparency is smaller than that of the metal oxide.

Further, the median size (D50) of the chemical desiccant to be used is in the range from 0.5 to 30 µm, particularly from 1 to 15 µm. The median size is measured as a volume-based particle size by, for example, a laser diffraction scattering method, and is the particle size at which the value of the cumulative distribution reaches 50%.

The range of such a particle size is greater than the wavelength of visible light, and thus, the hygroscopic resin layer formed by a composition formed by dispersing the chemical desiccant in the resin, that is, the resin composition becomes opaque. When the median size (D50) is smaller than the above range, scattering and absorption of visible light are greatly reduced, and high transparency is exhibited regardless of the refractive index. In other words, the transparency due to the reaction with water will not serve as an indicator for indicating the degree of water absorption. In addition, when the median size (D50) is larger than the above range, the variability in particle size increases, it is difficult to uniformly disperse the chemical desiccant, further, the variability in transparency due to water absorption also increases, and thus, the function as the indicator is impaired. As described later, since the chemical desiccant is mixed with the resin and the mixture is used to form a sheet or a coating layer, it is desirable to select a desiccant having a particle size smaller than the thickness of a resin layer to be formed. This is because, when a material having a particle size larger than the thickness of the resin layer is contained, a defect is formed in the resin layer, or the layer surface becomes rougher, which affects the film appearance, and thus, the indicator function as the effect of the present invention is hindered, and further, the moisture absorption function as the original function of the layer cannot be sufficiently exhibited.

Also, the chemical desiccant described above is preferably blended in an amount from 5 to 24 mass%, particularly from 10 to 20 mass%, into the hygroscopic resin layer formed by mixing with the resin, in order to allow a change in the transparency to be clearly recognized visually. When the blended amount is small, the change in the transparency is hardly visible, and when the blended amount is unnecessarily large, the chemical desiccant is non-uniformly dispersed and the change in the transparency is also non-uniform. Thus, the function as the indicator is impaired in both cases.

Note that the chemical desiccant described above may be surface-treated with a small amount of a surface treating agent, for example, a higher fatty acid metal salt such as zinc stearate or calcium stearate, to enhance the dispersibility in the resin, as long as the indicator function is not impaired.

### Binder Resin

As the resin in which the chemical desiccant is dispersed, that is, the binder resin, a resin suitable for the method of forming the resin layer can be selected. For example, in the case of a sheet form, a thermoformable thermoplastic resin is used. Examples of such a thermoplastic resin may include the following:
Olefin-based resins, for example, polyolefins such as low-density polyethylene, high-density polyethylene, polypropylene, poly-1-butene, poly(4-methyl-1-pentene), or random or block copolymers of α-olefins such as ethylene, propylene, 1-butene, and 4-methyl-1-pentene, and cyclic olefin copolymers;
Ethylene-vinyl compound copolymers, for example, ethylene-vinyl acetate copolymers, ethylene-vinyl alcohol copolymers, and ethylene-vinyl chloride copolymers;
Styrene-based resins, for example, polystyrene, acrylonitrile-styrene copolymers, ABS, and α-methylstyrene-styrene copolymers;
Polyvinyl-based resins, for example, polyvinyl chloride, polyvinylidene chloride, vinyl chloride-vinylidene chloride copolymers, polymethyl acrylate, and polymethyl methacrylate;
Polyamide-based resins, for example, nylon 6, nylon 6-6, nylon 6-10, nylon 11, and nylon 12;
Polyester-based resins, for example, polyethylene terephthalate (PET), polybutylene terephthalate, and polyethylene naphthalate (PEN);
Other resins, for example, polycarbonate, polyphenylene oxide, polyimide resins, polyamideimide resins, polyetherimide resins, fluororesins, allyl resins, polyurethane resins, cellulose resins, polysulfone resins, polyethersulfone resins, ketone resins, amino resins, or biodegradable resins such as polylactic acid.

Furthermore, a blend of the above-described resins or a modified product of these resins by copolymerization as appropriate (e.g., an acid-modified olefin resin) may be used as the binder resin.

In addition to the above-described thermoplastic resins, for example, an ultraviolet curable resin and/or a thermosetting resin can also be used as resins that can be formed by coating, and typical examples thereof include epoxy-based resins and acrylic-based resins. Examples of the forming method include a method in which the chemical desiccant is dispersed in the resin, the resultant dispersion is applied to an optionally selected base material, and forming is performed by ultraviolet curing or thermal curing.

Thus, in the present invention, the chemical desiccant used is a chemical desiccant having a refractive index difference of less than 0.1 from the reaction product with water, depending on the type of the resin as described above (i.e., the refractive index of the resin).

Examples of the refractive index of typical resins are shown below.
Polyethylene (PE): 1.54
Polypropylene (PP): 1.49
Polyethylene terephthalate (PET): 1.58
Polystyrene (PS): 1.59
Polyvinyl chloride (PVC): 1.53
Polymethylmethacrylate (PMMA): 1.49

As a combination of the chemical desiccant and the resin, a combination in which a refractive index difference between the chemical desiccant before the reaction with water and the resin is 0.2 or more, and a refractive index difference between the chemical desiccant after the reaction with water and the resin is less than 0.1 is preferred. Specifically, a combination of one or more selected from calcium oxide, magnesium oxide, and barium oxide and one or more selected from polyethylene, polypropylene, polyethylene terephthalate, polystyrene, polyvinyl chloride, and polymethyl methacrylate is preferred.

In the present invention, in order to sufficiently exhibit the performance of the chemical desiccant, it is desirable that the binder resin itself have a small water content, and thus, an olefin-based resin is particularly preferred.

### Water-Absorbing Sheet

In the present invention, the dispersion of the chemical desiccant in the resin is preferably performed by melt-kneading the chemical desiccant in the above-described amount with the resin, and the resin composition prepared by the melt-kneading is melt-extruded to form a hygroscopic resin layer, which is used as a water-absorbing sheet. In the formation of the hygroscopic resin layer, as in Examples described later, a desiccant master batch can be formed in advance and then kneaded with the binder resin, and as a base material of the desiccant master batch, a material that can be kneaded with the binder resin of the hygroscopic resin layer and allows the formation can be used.

The thickness of such a hygroscopic resin layer is set to a thickness to the extent that the target amount of water absorbed is achieved depending on the amount of the chemical desiccant blended in the resin layer. For example, when it is required to absorb as much moisture as possible, the thickness is set to be thick. However, when the thickness of the hygroscopic resin layer is excessively thick, it may be difficult to visually recognize the change in the transparency due to water absorption. Thus, in general, the thickness of the hygroscopic resin layer is preferably in the range from 5 to 75 µm, particularly from 5 to 50 µm. Therefore, a chemical desiccant having a particle size smaller than the thickness of the hygroscopic resin layer is preferably used.

As described above, in the water-absorbing sheet of the present invention, the indicator function is exhibited by the optimal selection of the type and the particle size of the chemical desiccant and the type of the binder resin. Further, by appropriately setting the blended amount of the desiccant and the thickness of the hygroscopic resin layer, it is possible to exhibit the visually recognizable indicator function more clearly.

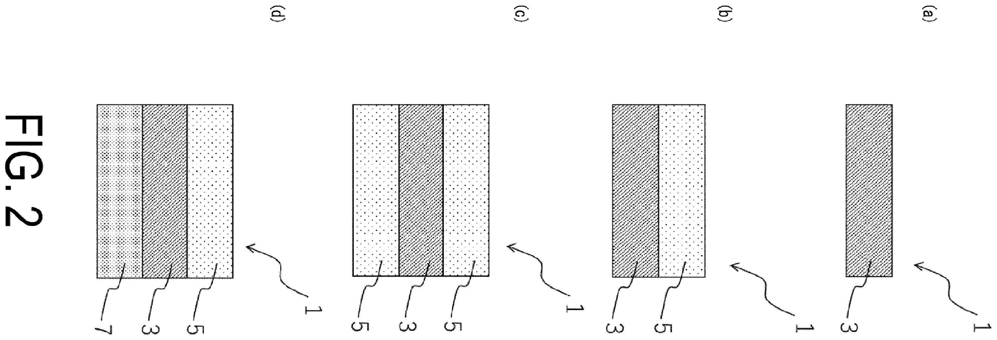

Referring to FIG. 2, the water-absorbing sheet 1 of the present invention may have a single-layer structure containing only the hygroscopic resin layer 3 described above (see FIG. 2(a)), or, on one surface of the hygroscopic resin layer 3, a surface protective layer 5 for preventing moisture permeation may be provided in order to maintain a drying function which is the original performance of the hygroscopic resin layer 3 (see FIG. 2(b)). Further, such a surface protective layer 5 may also be provided on both surfaces of the hygroscopic resin layer 3 as long as a change in the transparency due to moisture absorption of the hygroscopic resin layer 3 can be visually recognized (see FIG. 2(c)). In particular, the aspect in which the surface protective layer 5 is provided on both surfaces of the hygroscopic resin layer 3 also has an effect of suppressing deactivation of the hygroscopic resin layer 3 before use by forming a laminate with the surface protective layer by, for example, coextrusion.

The surface protective layer 5 is preferably transparent in that the change in transparency can be easily visually recognized.

It is also possible to impart slight adherence to one or both surfaces of the hygroscopic resin layer. For example, a pressure-sensitive adhesive layer can be formed, for example, by coextrusion with a resin having adherence, such as an ethylene-vinyl acetate copolymer (EVA), a soft polyolefin (e.g., LLDPE), or a metallocene polyolefin-based elastomer, and can be used in the form of a laminate. For example, the water-absorbing sheet 1 in FIG. 2(d) is a laminate in which the surface protective layer 5 is provided on one surface of the hygroscopic resin layer 3, and a pressure-sensitive adhesive layer 7 is provided on the other surface thereof.

The surface protective layer 5 and the pressure-sensitive adhesive layer 7 described above can be formed with any thickness, but they should be formed with a thickness that does not impair the transparency, and used in a form in which improvement in the transparency due to water absorption of the water-absorbing sheet 1 can be visually recognized, that is, in a state such that the water-absorbing sheet 1 has the indicator function.

In the present invention, as an example of criteria for evaluating the indicator function of the water-absorbing sheet 1, the water-absorbing sheet 1 functions as an indicator more clearly as the difference (amount of change in haze) between the haze value H₀ in a state where water is not absorbed in the water-absorbing sheet 1 (hygroscopic resin layer 3) and the haze value H_{w} in a state where water is absorbed in the water-absorbing sheet 1 increases.

For example, when the amount of change in haze (H₀ - H_{w}) is 10 or more, visual recognition is possible, and the amount of change in haze is preferably 35 or more, more preferably 40 or more, and most preferably 45 or more.

The degree of the difference in the haze values is important for the development of the indicator function as described above. In addition, when application of the present water-absorbing sheet to various uses is assumed, it is desirable that the present water-absorbing sheet has the total light transmittance of about 70% as another optical property.

The water-absorbing sheet 1 of the present invention can be used alone for removing moisture from the atmosphere, or can be attached to another base material 9 and used for drying the another base material 9, or can exert a barrier function against, for example, moisture, together with the another base material 9 to which the water-absorbing sheet 1 is attached.

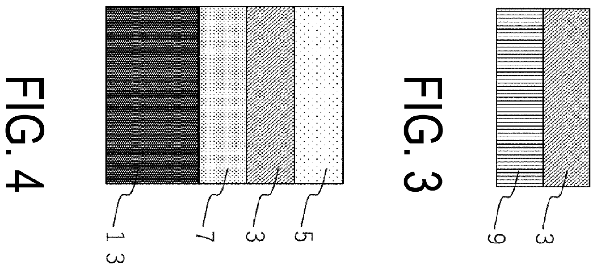

As an example of use in this case, as shown in FIG. 3, the hygroscopic resin layer 3 can be directly attached to the another base material 9 to exhibit the drying function, or can be attached by coextrusion with a thermoplastic resin for forming the another base material 9. Further, the hygroscopic resin layer 3 can be attached by lamination using an adhesive or by using a pressure-sensitive adhesive.

Here, as an example of the another base material 9, any material can be used. Particularly, a material that easily absorbs water, such as a polyester-based resin such as polyethylene terephthalate, a polyamide-based resin such as nylon, or an acrylic-based resin, can be used. By attaching the water-absorbing sheet 1 of the present invention to the base material 9, the effect of the water-absorbing sheet 1 can be sufficiently exhibited. Also, as the another base material 9, for example, a barrier film in which an inorganic barrier layer is formed on a polyethylene terephthalate film can be used. In such a barrier film, the inorganic barrier layer is an inorganic vapor-deposited film formed by, for example, physical vapor deposition such as sputtering, vacuum deposition, and ion plating, or chemical vapor deposition such as plasma CVD. The inorganic barrier layer is formed of various metals or metal oxides. For example, a silicon oxide film formed by plasma CVD using an organosilicon compound and an aluminum oxide film provided by sputtering of aluminum are most typical as the vapor-deposited layer.

Further, as the another base material 9, in addition to the above barrier films, a metal foil (e.g., an aluminum foil) with, for example, polyethylene terephthalate as a protective film can also be used, and the water-absorbing sheet can be used by being attached to various backsheets as described later.

A backsheet with the metal foil as described above is adhesively fixed, through a sealing resin, to, for example, one surface of a device that does not transmit light, and completely blocks moisture by the metal foil. However, the metal foil is very thin, for example, 20 µm or less in thickness, considering workability for bringing the metal foil into close contact with the device and weight reduction of the entire sheet, for example. In such a thin metal foil, a pinhole is likely to be formed, and moisture may penetrate into the device through the pinhole. If the water-absorbing sheet 1 of the present invention is attached to the metal foil, such inflow of moisture can be effectively prevented. As a specific example of use, such a form can be widely used as a backsheet member used in electronic device products, such as solar cell modules and organic EL products (e.g., organic EL lighting and organic EL displays).

In the backsheet (the another base material 9) formed by attaching the hygroscopic resin layer 3 (water-absorbing sheet 1) as described above, a thermoplastic resin film represented by a polyester resin such as polyethylene terephthalate may also be provided as a surface protective film on the other surface (the surface not attached to the backsheet) of the water-absorbing sheet 1. Providing the surface protective film has an effect of suppressing the deactivation of the hygroscopic resin layer due to moisture in the atmosphere when the water-absorbing sheet 1 is used.

In addition, even in the water-absorbing sheet 1 attached to such a backsheet, the transparency of the water-absorbing sheet 1 can be visually recognized from the end portion of the water-absorbing sheet 1. The color of the backsheet may be transparent or colored, and for example, a colored polyester film may be used as the surface protective film. By adopting a configuration in which a part of the surface of the sheet is transparent, it becomes possible to visually recognize the deactivation of the water-absorbing sheet 1. It is also possible to temporarily peel off the polyester film and confirm the color of the water-absorbing sheet.

In addition, when the backsheet with the metal foil, corresponding to the another base material 9 is used, the performance of the hygroscopic resin layer 3 can be sufficiently exhibited by attaching the side where the hygroscopic resin layer 3 and the another base material 9 are not attached to each other so as to face the side of an electronic device to be targeted, such as a solar cell or an organic EL. In this case, the same effect can be obtained even when a thermoplastic resin film represented by a polyester resin such as polyethylene terephthalate, for example, is provided as the surface protective film on the surface of the water-absorbing sheet 1, the another base material 9 being not attached to the surface of the water-absorbing sheet 1.

In the present invention, by using the water-absorbing sheet 1 with one surface thereof attached to the barrier film described above, both a moisture barrier function exhibited by the water-absorbing sheet 1 and an oxygen barrier function of the barrier film can be combined.

When the water-absorbing sheet 1 is used by being attached to such a barrier film, it is usually preferable to cause the other surface of the water-absorbing sheet 1 (the surface to which the barrier film is not attached) to exhibit water absorbency as a hygroscopic functional surface, and this can prevent the atmosphere on the side facing the water-absorbing sheet from drying out and prevent oxygen from flowing into the atmosphere.

In the case where the water-absorbing sheet 1 is used by being attached to the barrier film as described above, when the barrier film is transparent, the transparency (degree of moisture absorption) of the water-absorbing sheet 1 can be visually recognized from the side of the barrier film. In this case, a printed image that allows the transparency to be visible may also be provided on the surface of the water-absorbing sheet 1 (the surface opposite to the barrier film).

Note that, as the pressure-sensitive adhesive or adhesive used for the attachment of the water-absorbing sheet 1, an epoxy-based or urethane-based dry laminate adhesive is preferably used. Also, when the water-absorbing sheet 1 is attached without using such a pressure-sensitive adhesive or an adhesive, an olefin-based resin having high cohesive strength, particularly polyethylene (low-, medium-, or high-density polyethylene) is preferred as the binder resin for dispersing the chemical desiccant.

In addition, when a resin layer such as the surface protective layer 5 is provided on the surface of the water-absorbing sheet 1, the pressure-sensitive adhesive layer 7 can be formed on the side opposite to the surface protective layer, by coextrusion with for example, a resin having adhesiveness, such as an ethylene-vinyl acetate copolymer (EVA), a soft polyolefin (LLDPE), or a metallocene polyolefin-based elastomer, and can be used in the form of the laminate.

In the present invention, whether or not the amount of water absorbed in the water-absorbing sheet 1 (hygroscopic resin layer 3) reaches saturation can be confirmed by the transparency, and thus, the water-absorbing sheet 1 is replaced as appropriate. In addition, quality control after the manufacturing can also be performed by using the indicator function based on the transparency. Further, by visually recognizing the transparency partially and locally, the position of the moisture permeable portion due to, for example, a pinhole can also be confirmed.

### Examples

The excellent effects of the water-absorbing sheet of the present invention will be described in the following Experimental Examples.

### Preparation of Calcium Oxide-Containing Master Batch

Pellets of linear low-density polyethylene (LLDPE) were prepared as a base resin of a calcium oxide-containing master batch.

Calcium oxide powder was prepared as a chemical desiccant, adjusted to a desired particle size using a mill, and kneaded with the base resin pellets to prepare a calcium oxide-containing master batch (A) having a calcium oxide content of 50 wt.%.

Note that using polypropylene (PP) as the base resin, a calcium oxide-containing master batch prepared in the same manner was designated as a calcium oxide-containing master batch (B), and using polyethylene terephthalate (PET) as the base resin, a calcium oxide-containing master batch prepared in the same manner was designated as a calcium oxide-containing master batch (C).

### Preparation of Magnesium Oxide-Containing Master Batch

Pellets of low-density polyethylene (LDPE) were prepared as a base resin of a magnesium oxide-containing master batch.

Magnesium oxide powder was prepared as a chemical desiccant, adjusted to a desired particle size using a mill, and kneaded with the resin pellets to prepare a magnesium oxide-containing master batch (D) having a magnesium oxide content of 50 wt.%.

### Preparation of Zeolite-Containing Master Batch

Pellets of low-density polyethylene (LDPE) were prepared as a base resin of a zeolite-containing master batch.

Zeolite powder was prepared as a desiccant, adjusted to a desired particle size using a mill, and kneaded with the resin pellets to prepare a zeolite-containing master batch (E) having a zeolite content of 50 wt.%.

### Example 1

The CaO-containing master batch (A) was prepared as a desiccant-containing master batch, and further, a low-density polyethylene (LDPE) was prepared as a binder resin.

The binder resin (LDPE) was mixed with the CaO-containing master batch (A) such that the content of the desiccant component (CaO) was 15 parts by weight (i.e., 15 wt.%) relative to 85 parts by weight of the resin component to yield a resin composition for forming a hygroscopic resin layer, the resin composition was fed into an extruder, and a film (thickness of 30 µm) of a calcium oxide-containing LDPE layer (hygroscopic resin layer) was formed.

Note that the median size of the calcium oxide particles contained in the above film was 2 µm.

### Example 2

An evaluation sample was prepared in the same manner as in Example 1, except that LDPE was mixed such that the content of the desiccant component (CaO) was 20 wt.%.

### Example 3

An evaluation sample was prepared in the same manner as in Example 1, except that LDPE was mixed such that the content of the desiccant component (CaO) was 24 wt.%.

### Example 4

An evaluation sample was prepared in the same manner as in Example 1, except that LDPE was mixed such that the content of the desiccant component (CaO) was 30 wt.%.

### Example 5

An evaluation sample was prepared in the same manner as in Example 1, except that LDPE was mixed such that the content of the desiccant component (CaO) was 10 wt.%.

### Example 6

An evaluation sample was prepared in the same manner as in Example 1, except that LDPE was mixed such that the content of the desiccant component (CaO) was 5 wt.%.

### Example 7

An evaluation sample was prepared in the same manner as in Example 1, except that LDPE was mixed such that the content of the desiccant component (CaO) was 3.5 wt.%.

### Example 8

An evaluation sample was prepared in the same manner as in Example 1, except that a master batch prepared by changing the particle size (median size) of calcium oxide in the master batch (A) to 50 µm was used.

### Example 9

An evaluation sample was prepared in the same manner as in Example 1, except that a master batch prepared by changing the particle size (median size) of calcium oxide in the master batch (A) to 30 µm was used.

### Example 10

An evaluation sample was prepared in the same manner as in Example 1, except that a master batch prepared by changing the particle size (median size) of calcium oxide in the master batch (A) to 15 µm was used.

### Example 11

An evaluation sample was prepared in the same manner as in Example 1, except that a master batch prepared by changing the particle size (median size) of calcium oxide in the master batch (A) to 1 µm was used.

### Example 12

The CaO-containing master batch (B) was prepared as a desiccant-containing master batch, and further, polypropylene (PP) was prepared as a binder resin.

The binder resin (PP) was mixed with the CaO-containing master batch (B) such that the content of the desiccant component (CaO) was 15 parts by weight (i.e., 15 wt.%) relative to 85 parts by weight of the resin component to yield a resin composition for forming a hygroscopic resin layer, the resin composition was fed into an extruder, and a film (thickness of 30 µm) of a calcium oxide-containing PP layer (hygroscopic resin layer) was formed.

Note that the median size of the calcium oxide particles contained in the above film was 2 µm.

### Example 13

The CaO-containing master batch (C) was prepared as a desiccant-containing master batch, and further, polyethylene terephthalate (PET) was prepared as a binder resin.

The binder resin (PET) was mixed with the CaO-containing master batch (A) such that the content of the desiccant component (CaO) was 15 parts by weight (i.e., 15 wt.%) relative to 85 parts by weight of the resin component to yield a resin composition for forming a hygroscopic resin layer, the resin composition was fed into an extruder, and a film (thickness of 30 µm) of a calcium oxide-containing LDPE layer (hygroscopic resin layer) was formed.

Note that the median size of the calcium oxide particles contained in the above film was 2 µm.

### Example 14

To form a surface protective layer, LDPE was fed into an extruder for the surface protective layer.

In addition, a resin composition for forming a hygroscopic resin layer having the same composition as that in Example 1 was fed into the extruder.

Further, in order to form a pressure-sensitive adhesive layer, a metallocene polyolefin-based elastomer was fed into an extruder for an adhesive resin layer.

The above materials were coextruded to form a film containing three layers of an LDPE layer (surface protective layer, 15 µm)/a CaO-containing LDPE layer (hygroscopic resin layer, 30 µm)/a metallocene polyolefin-based elastomer layer (pressure-sensitive adhesive layer, 15 µm).

Note that the median size of the calcium oxide particles contained in the above film was 2 µm.

### Example 15

An evaluation sample was prepared in the same manner as in Example 14, except that the thickness of the hygroscopic resin layer was changed to 10 µm.

### Example 16

An evaluation sample was prepared in the same manner as in Example 14, except that the thickness of the hygroscopic resin layer was changed to 15 µm.

### Example 17

An evaluation sample was prepared in the same manner as in Example 14, except that the thickness of the hygroscopic resin layer was changed to 50 µm.

### Example 18

In order to form a surface protective layer on both surfaces of the hygroscopic resin layer, LDPE was fed into two extruders for the surface protective layer.

In addition, the same composition for forming a hygroscopic resin layer as in Example 1 was fed into an extruder.

The above materials were coextruded to form a film containing three layers of a LDPE layer (surface protective layer, 15 µm)/a CaO-containing LDPE layer (hygroscopic resin layer, 30 µm)/a LDPE layer (surface protective layer, 15 µm).

Note that the median size of the calcium oxide particles contained in the above film was 2 µm.

### Example 19

An evaluation sample was prepared in the same manner as in Example 1, except that the thickness of the hygroscopic resin layer was changed to 75 µm.

### Example 20

An evaluation sample was prepared in the same manner as in Example 1, except that the thickness of the hygroscopic resin layer was changed to 100 µm.

### Example 21

The MgO-containing master batch (D) was prepared as a desiccant-containing master batch, and further, a low-density polyethylene (LDPE) was prepared as a binder resin.

The binder resin (LDPE) was mixed with the MgO-containing master batch (D) such that the content of the desiccant component (MgO) was 15 parts by weight (i.e., 15 wt.%) relative to 85 parts by weight of the resin component to yield a resin composition for forming a hygroscopic resin layer, the resin composition was fed into an extruder, and a film (thickness of 30 µm) of a magnesium oxide-containing LDPE layer (hygroscopic resin layer) was formed.

Note that the median size of the magnesium oxide particles contained in the above film was 3 µm.

### Example 22

An evaluation sample was prepared in the same manner as in Example 21, except that a master batch prepared by changing the particle size (median size) of magnesium oxide in the master batch (D) to 800 nm was used.

### Example 23

An evaluation sample was prepared in the same manner as in Example 21, except that a master batch prepared by changing the particle size (median size) of magnesium oxide in the master batch (D) to 400 nm was used.

### Example 24

An epoxy-based ultraviolet cured resin was prepared as an ultraviolet curable resin. Calcium oxide powder was prepared so as to be 15 parts by weight relative to 85 parts by weight of the resin, and was sufficiently stirred to prepare a calcium oxide dispersion. Here the calcium oxide powder used was adjusted to a median size of 2 µm using a mill.

Next, the dispersion was applied to a polyester film using a bar coater, and the coating film was cured by ultraviolet irradiation and heat treatment to yield a coating film having a thickness of 5 µm. In the present Example, the coating film was isolated from the polyester film and evaluated for the confirmation of the indicator function.

### Comparative Example 1

An evaluation sample was prepared in the same manner as in Example 1, except that the zeolite-containing master batch (E) was used instead of the calcium oxide-containing master batch (A). Note that the median size of the zeolite powder was 2 µm.

The samples prepared in Examples 1 to 24 and Comparative Example 1 were evaluated by the following procedure, and the results are shown in Tables 1 and 2.

### Measurement of Refractive Index Difference

The refractive index difference can be measured by a known method such as an immersion method (Becke method) or an Abbe refractometer. The refractive index of the desiccant before reaction with water and the refractive index of the reaction product of the desiccant with water are measured respectively, and those having a refractive index difference from the resin in an appropriate range can be selected.

The refractive index in Table was measured using an Abbe refractometer.

### Confirmation of Moisture Absorption Performance

In order to confirm the moisture absorption performance of the water-absorbing sheet, each sample prepared in Examples 1 to 24 and Comparative Example 1 was cut into a size of 100 cm², and the weight of the sample before water absorption was measured.

Next, the sample was allowed to absorb moisture in a thermostatic chamber at 30°C and 80% for three days, the weight after the water absorption was measured, and the amount of water absorbed [g/m²] was calculated from the weight change before and after the water absorption.

### Confirmation of Optical Properties

For each of the samples prepared in Examples 1 to 24 and Comparative Example 1, the total light transmittance in a state where water was not absorbed and the haze value H₀ in a state where water was not absorbed were measured. Next, each sample was allowed to absorb moisture in a thermostatic chamber at 30°C and 80% for three days, and the haze value H_{w} in a state where water was absorbed was measured. Finally, the change in the haze values before and after the water absorption, H₀ - H_{w}, was calculated, and the visibility was evaluated in four grades according to the following criteria. The total light transmittance and the haze values were measured in accordance with JIS K7136, and a haze meter (NDH8000, Nippon Denshoku Industries Co., Ltd.) was used as a measuring instrument.
⊚: Difference in haze values (H₀ - H_{w}) is 45 or more
○: Difference in haze values (H₀ - H_{w}) is 35 or more and less than 45
△: Difference in haze values (H₀ - H_{w}) is 10 or more and less than 35
×: Difference in haze values (H₀ - H_{w}) is less than 10

**[Table 1]**

| **Examples** | **Surface protective layer (thickness [µm])** | **Binder resin of hygroscopic resin layer** | **Type of desiccant** | **Particle size of desiccant (D50)** | **Desiccant content** | **Refractive index difference between binder resin - desiccant (before moisture absorption)** | **Refractive index difference between binder resin - desiccant (after moisture absorption)** | **Thickness of hygroscopic resin layer [µm]** | **Pressure-sensitive adhesive layer or surface protective layer (thickness [µm])** |
|---|---|---|---|---|---|---|---|---|---|
| Example 1 | - | LDPE | CaO | 2 µm | 15 wt.% | 0.3 | 0.03 | 30 | - |
| Example 2 | - | LDPE | CaO | 2 µm | 20 wt.% | 0.3 | 0.03 | 30 | - |
| Example 3 | - | LDPE | CaO | 2 µm | 24 wt.% | 0.3 | 0.03 | 30 | - |
| Example 4 | - | LDPE | CaO | 2 µm | 30 wt.% | 0.3 | 0.03 | 30 | - |
| Example 5 | - | LDPE | CaO | 2 µm | 10 wt.% | 0.3 | 0.03 | 30 | - |
| Example 6 | - | LDPE | CaO | 2 µm | 5 wt.% | 0.3 | 0.03 | 30 | - |
| Example 7 | - | LDPE | CaO | 2 µm | 3.5 wt.% | 0.3 | 0.03 | 30 | - |
| Example 8 | - | LDPE | CaO | 50 µm | 15 wt.% | 0.3 | 0.03 | 30 | - |
| Example 9 | - | LDPE | CaO | 30 µm | 15 wt.% | 0.3 | 0.03 | 30 | - |
| Example 10 | - | LDPE | CaO | 15 µm | 15 wt.% | 0.3 | 0.03 | 30 | - |
| Example 11 | - | LDPE | CaO | 1 µm | 15 wt.% | 0.3 | 0.03 | 30 | - |
| Example 12 | - | PP | CaO | 2 µm | 15 wt.% | 0.35 | 0.08 | 30 | - |
| Example 13 | - | PET | CaO | 2 µm | 15 wt.% | 0.26 | 0.006 | 30 | - |
| Example 14 | LDPE(15) | LDPE | CaO | 2 µm | 15 wt.% | 0.3 | 0.03 | 30 | *1 |
| Example 15 | LDPE(15) | LDPE | CaO | 2 µm | 15 wt.% | 0.3 | 0.03 | 10 | *1 |
| Example 16 | LDPE(15) | LDPE | CaO | 2 µm | 15 wt.% | 0.3 | 0.03 | 15 | *1 |
| Example 17 | LDPE(15) | LDPE | CaO | 2 µm | 15 wt.% | 0.3 | 0.03 | 50 | *1 |
| Example 18 | LDPE(15) | LDPE | CaO | 2 µm | 15 wt.% | 0.3 | 0.03 | 30 | LDPE(15) |
| Example 19 | - | LDPE | CaO | 2 µm | 15 wt.% | 0.3 | 0.03 | 75 | - |
| Example 20 | - | LDPE | CaO | 2 µm | 15 wt.% | 0.3 | 0.03 | 100 | - |
| Example 21 | - | LDPE | MgO | 3 µm | 15 wt.% | 0.2 | 0.02 | 30 | - |
| Example 22 | - | LDPE | MgO | 800 nm | 15 wt.% | 0.2 | 0.02 | 30 | - |
| Example 23 | - | LDPE | MgO | 400 nm | 15 wt.% | 0.2 | 0.02 | 30 | - |
| Example 24 | - | *2 | CaO | 2 µm | 15 wt.% | 0.31 | 0.04 | 5 | - |
| Comparative Example 1 | - | LDPE | Zeolite | 2 µm | 15 wt.% | 0.14 | 0.154 | 30 | - |

| | | | | | | | | | |
|---|---|---|---|---|---|---|---|---|---|
| *1 Metallocene polyolefin-based elastomer (15) *2 Epoxy-based ultraviolet curable resin | | | | | | | | | |

**[Table 2]**

| **Examples** | **Total light transmittance** | **Haze H₀ before moisture absorption** | **Haze H_{w} after moisture absorption** | **Amount of change in haze H₀ - H_{w}** | **Visual evaluation** | **Moisture absorption performance [g/m²]** |
|---|---|---|---|---|---|---|
| Example 1 | 85 | 87 | 40 | 47 | ⊚ | 1.5 |
| Example 2 | 82 | 88 | 42 | 46 | ⊚ | 1.8 |
| Example 3 | 80 | 90 | 45 | 45 | ⊚ | 2.1 |
| Example 4 | 79 | 92 | 60 | 32 | Δ | 3.0 |
| Example 5 | 88 | 82 | 34 | 48 | ⊚ | 1.1 |
| Example 6 | 90 | 64 | 29 | 35 | ○ | 0.6 |
| Example 7 | 92 | 55 | 28 | 27 | Δ | 0.4 |
| Example 8 | 81 | 92 | 75 | 17 | Δ | 1.4 |
| Example 9 | 81 | 90 | 50 | 40 | ○ | 1.4 |
| Example 10 | 83 | 88 | 42 | 46 | ⊚ | 1.4 |
| Example 11 | 86 | 87 | 40 | 47 | ⊚ | 1.5 |
| Example 12 | 83 | 88 | 42 | 46 | ⊚ | 1.4 |
| Example 13 | 82 | 82 | 38 | 44 | ○ | 1.4 |
| Example 14 | 84 | 88 | 41 | 47 | ⊚ | 1.5 |
| Example 15 | 86 | 79 | 35 | 44 | ○ | 0.5 |
| Example 16 | 85 | 82 | 36 | 46 | ⊚ | 0.7 |
| Example 17 | 83 | 90 | 45 | 45 | ⊚ | 2.3 |
| Example 18 | 84 | 88 | 41 | 47 | ⊚ | 1.5 |
| Example 19 | 81 | 92 | 48 | 44 | ○ | 3.5 |
| Example 20 | 78 | 91 | 60 | 31 | Δ | 4.1 |
| Example 21 | 84 | 87 | 41 | 46 | ⊚ | 1.4 |
| Example 22 | 88 | 70 | 50 | 20 | Δ | 1.4 |
| Example 23 | 90 | 62 | 48 | 14 | Δ | 1.4 |
| Example 24 | 85 | 60 | 20 | 40 | ○ | 0.3 |
| Comparative Example 1 | 68 | 99 | 98 | 1 | × | 2.0 |

### Reference Experiment 1

In order to confirm the indicator function, Reference Experiment 1 was carried out by the following procedure.

### Preparation of a Humidity-Controlled PET Film;

In order to confirm the drying function of the water-absorbing sheet, a humidity-controlled PET film that had absorbed water by the following procedure was prepared.

A PET film having a thickness of 100 µm was allowed to stand in an environment of 23°C and 50% RH for 48 hours to yield the humidity-controlled PET film. The humidity-controlled PET film has a water content of about 3000 ppm.

### Confirmation of Drying Function of Water-Absorbing Sheet;

The humidity-controlled PET film (water content of 3000 ppm) prepared by the above procedure was attached to the water-absorbing sheet prepared in Example 14, and the resultant was laminated as shown in FIG. 4.

Next, for a drying treatment, a plurality of the resultant laminate was stacked and sealed in an aluminum bag and degassed, and stored in a thermostatic chamber at 40°C for one day. After the treatment, the water-absorbing sheet was peeled off from the humidity-controlled PET film, and the water content of the humidity-controlled PET film was measured by the Karl Fischer method. As a result, the water content was reduced to 10 ppm or less, and thus, the drying function of the water-absorbing sheet could be confirmed.

### Confirmation of Drying Function of Transparent Water-Absorbing Sheet;

The water-absorbing sheet prepared in Example 14 was allowed to stand in a thermostatic chamber at 30°C and 80% for 24 hours to absorb moisture as a moisture absorption treatment. The haze value before the moisture absorption was 88%, and after the moisture absorption, the haze value was 43%, with a color change visually confirmed.

Next, the humidity-controlled PET film 13 (water content of 3000 ppm) prepared by the above procedure was attached to the water-absorbing sheet subjected to the moisture absorption treatment, and the resultant was laminated as shown in FIG. 4.

Next, for a drying treatment, a plurality of the resultant laminate was stacked and sealed in an aluminum bag and degassed, and stored in a thermostatic chamber at 40°C for one day. After the treatment, the water-absorbing sheet was peeled off from the humidity-controlled PET film, and the water content of the humidity-controlled PET film was measured by the Karl Fischer method. As a result, the water content was 2500 ppm, and the drying function was not exhibited sufficiently.

### Reference Experiment 2

In order to confirm the indicator function in the backsheet configuration, Reference Experiment 2 was carried out by the following procedure.

On one surface of the hygroscopic resin layer produced by the procedure of Example 1, an aluminum foil (thickness of 20 µm) and a polyester film (thickness of 50 µm) were laminated in this order as the another base materials.

Next, a black polyester film (50 µm) was attached by dry lamination to the side of the hygroscopic resin layer on which the aluminum foil was not laminated. Note that the size of the black polyester film laminated was smaller than that of the hygroscopic resin layer.

Next, a transparent polyester film (50 µm) cut out to the same size as the hygroscopic resin layer was attached by dry lamination to the side of the hygroscopic resin layer on which the black polyester film was laminated to prepare a laminate for a backsheet.

It was confirmed that the color of the film was uniform in the plane immediately after the preparation of the laminate. Next, the prepared laminate for a backsheet was stored in an environment of 40°C and 90% for three days, and discoloration from the edge of the laminate was visually recognized.

### Test Results

It was confirmed that the laminated protective film for moisture absorption of the present invention had a sufficient moisture absorption capacity and that the optical properties changed to the visually recognizable degree as the remaining capacity decreased. In the case of a chemical desiccant, the refractive index of the material changes due to the reaction involving moisture absorption, and the refractive index difference between the material and the base resin decreases accordingly. However, in the case of a desiccant by physical adsorption such as zeolite, the change in the refractive index of the material of the desiccant, the change in the refractive index involving moisture absorption, is small, and thus, it is thought that no change in the optical properties of the water-absorbing sheet occurs.

Further, by adjusting the thickness of the film and the amount of the desiccant to appropriate ranges, the indicator function can be used more effectively.

As shown in Reference Experiments, when drying of the humidity-controlled PET film was attempted using a film that had become transparent, that is, had lost its moisture absorption performance, the drying performance was not exhibited, and it was confirmed that the color change serves as an indicator that accurately indicates the moisture absorption performance.

### Reference Signs List

1: Water-absorbing sheet
3: Hygroscopic resin layer
5: Surface protective layer
7: Pressure-sensitive adhesive layer
9: Another base material
13: Humidity-controlled PET film

## Claims

1. A water-absorbing sheet, comprising:
a hygroscopic resin layer formed of a resin composition in which a chemical desiccant is dispersed in a resin, wherein
the water-absorbing sheet has an indicator function for indicating a decrease in moisture absorption capacity by exhibiting transparency due to moisture absorption.

2. The water-absorbing sheet according to claim 1, wherein the chemical desiccant has a median size (D50) in a range from 0.5 to 30 µm and is contained in the resin composition in an amount from 5 to 24 mass%.

3. The water-absorbing sheet according to claim 1 or 2, wherein the chemical desiccant has a refractive index difference of 0.2 or more from the resin in a state where water is not absorbed, and a refractive index difference of less than 0.1 from the resin in a state where water is absorbed.

4. The water-absorbing sheet according to any one of claims 1 to 3, wherein the chemical desiccant is calcium oxide.

5. The water-absorbing sheet according to any one of claims 1 to 4, wherein the resin is a thermoplastic resin.

6. The water-absorbing sheet according to claim 5, wherein the thermoplastic resin is an olefin-based resin.

7. The water-absorbing sheet according to any one of claims 1 to 6, wherein the water-absorbing sheet has a single-layer structure containing only the hygroscopic resin layer.

8. The water-absorbing sheet according to any one of claims 1 to 6, comprising the hygroscopic resin layer and a surface protective layer provided on one surface of the hygroscopic resin layer.

9. The water-absorbing sheet according to any one of claims 1 to 8, wherein the water-absorbing sheet is used with one surface of the hygroscopic resin layer attached to another base material.

10. The water-absorbing sheet according to claim 9, wherein the another base material is a barrier film.

11. The water-absorbing sheet according to claim 10, wherein the barrier film includes an inorganic barrier layer.

12. The water-absorbing sheet according to claim 10, wherein the another base material includes a metal foil.

13. The water-absorbing sheet according to claim 1, the water-absorbing sheet being used for an electronic device.

14. The water-absorbing sheet according to claim 13, wherein the electronic device is a solar cell.

15. The water-absorbing sheet according to claim 13, wherein the electronic device is an organic EL.
